# EUROPÄISCHE PATENTSCHRIFT

(11) **EP 2 574 809 B1**
(45) Veröffentlichungstag und Bekanntmachung des Hinweises auf die Patenterteilung: **22.01.2014**
(21) Anmeldenummer: 11183512.0
(22) Anmeldetag: 30.09.2011
(51) Int. Cl.: F16D 13/64

(54) **Federkranz**
Spring washer
Couronne de ressort

(43) Veröffentlichungstag der Anmeldung: 03.04.2013
(73) Patentinhaber: GKN Driveline Köping AB, 731 36 Köping (SE)
(72) Erfinder: Nett, Hans-Peter, 53518 Adenau (DE); Haupt, Jan, 51515 Kürten (DE)
(74) Vertreter: Tersteegen, Felix

(56) Entgegenhaltungen:
- DE-A1-102007 040 023
- GB-A- 753 732
- US-A1- 2002 100 656

## Beschreibung

Die Erfindung betrifft einen Federkranz für den Einsatz als Spreizelement einer Kupplungsvorrichtung, insbesondere einer hydraulisch angesteuerten Lamellenkupplung. Der Federkranz umfasst einen Stützring.

Kupplungsvorrichtungen wie beispielsweise hydraulisch angesteuerte Lamellenkupplungen werden unter anderem in kupplungsgesteuerten Ausgleichseinheiten von Kraftfahrzeugen eingesetzt. Hiermit werden Antriebskräfte gezielt dosiert auf die Räder der angeschlossenen Achse geleitet und das dynamische Fahrverhalten eines Fahrzeugs beeinflusst. Außerdem kann eine solche Kupplung als Teil einer Ausgleichseinheit eines Kraftfahrzeugs dazu dienen, einen wahlweise zuschaltbaren oder entkoppelbaren Sekundärteil des Antriebsstrangs (zum Beispiel zu- und abschaltbarer Allradantrieb) zu realisieren, in dem die Sekundärachse und die Sekundärachsantriebsräder durch Öffnen der Kupplung vom Antriebsleistungsfluss entkoppelt bzw. in diesen eingekoppelt werden. Für die genannten Anwendungen ist es erforderlich, dass die Kupplungen sich zügig schließen und öffnen lassen und dass sie schnell und sicher ansprechen, um das angestrebte Regelverhalten zu gewährleisten. Die EP 2 116 411 A1 offenbart eine solche kupplungsgesteuerten differentiallose oder differentialbehaftete Ausgleichseinheit als Bestandteil eines zu- oder abschaltbaren Sekundärantriebsstrangs.

Das Öffnen der Kupplung wird durch Federelemente (für Federelemente siehe GB-753732) unterstützt, die beim Öffnen der Kupplung einen zur Kupplungsbetätigung verwendeten, in der Regel hydraulisch betätigen Druckkolben zurückdrängen, so dass sich die Lamellen eines Lamellenpaket, also Innen- und Außenlamellen, ausreichen voneinander lösen bzw. entfernen können. Es ist angestrebt, dass nach vollständigem Öffnen der Kupplung benachbarte Lamellen so frei drehen können, dass eine Kupplung bei entkoppeltem Sekundärachsantriebsstrang trocken laufen kann, um weitgehend verlustfrei mitrotieren zu können.

Da durch die Kupplungen gezielt Einfluss auf das einem Sekundärachsantriebsrad über die Kupplung übertragene Moment genommen werden kann, um das dynamische Fahrverhalten des Fahrzeugs zu beeinflussen, ist die Federkennlinie der eingesetzten Federn für die dosierte Ansteuerung der Kupplung relevant. Die Federkennlinie sollte daher möglichst linear und gut reproduzierbar hergestellt werden können.

Hinzu kommt, dass der in den Ausgleichseinheiten zur Verfügung stehende Bauraum außerordentlich knapp bemessen ist und man generell bemüht ist, die Anzahl der zu verbauenden Teile so gering wie möglich zu halten.

Aufgabe der Erfindung ist es daher, einen Federkranz für den Einsatz als Spreizelement einer Kupplungsvorrichtung zur Verfügung zu stellen, der kostengünstig und mit gut reproduzierbarer Federkennlinie herstellbar ist, der den Einsatz möglichst weniger Bauteil erfordert und der sich für den Einsatz in einer Ausgleichseinheit eines Antriebsstrangs eines Kraftfahrzeugs eignet, die eine Kupplungsvorrichtung aufweist, mittels der die angeschlossenen Antriebsräder gezielt aus dem Antriebsleistungsfluss herausgenommen oder diesem zugeschaltet werden können und/oder mittels der die angeschlossenen Antriebsräder gezielt dosiert angesteuert werden können.

Diese Aufgabe wird nach der Erfindung dadurch gelöst, dass eine Vielzahl von Federelementen über den Umfang des Stützrings vorgesehen ist, die als Ausklinkungen aus dem Stützringmaterial gebildet sind.

Bevorzugt ist vorgesehen, dass der Stützring einen ersten Schenkel aufweist, aus dem die Federelemente ausgeklinkt sind, und einen zweiten Schenkel aufweist, der vom Fuß des ersten Schenkel ausgehend abgewinkelt ist, bevorzugt rechtwinklig abgewinkelt ist. Mittels des zweiten Schenkels lässt sich der Federkranz unter anderem relativ zur Kupplungsvorrichtung und den weiteren angrenzenden Bauteilen zentrieren.

Außerdem kann der Stützring einen dritten Schenkel aufweisen, der vom zweiten Schenkel ausgehend abgewinkelt ist, bevorzugt rechtwinklig abgewinkelt ist. Der dritte Schenkel und der erste Schenkel verlaufen bevorzugt parallel, wobei sich der erste Schenkel ausgehend vom zweiten Schenkel radial auswärts erstrecken kann und sich der dritte Schenkel ausgehend vom zweiten Schenkel radial einwärts erstrecken kann, so dass sich ein in etwa Z-förmiger Querschnitt des Stützrings ergibt.

Die vorstehende Ausgestaltung ermöglicht, dass sich der Stützring mittels des zwischen ersten und dritten Schenkel angerordneten zweiten Schenkel in axialer Richtung erstrecken kann, um innerhalb der Kupplungsbaugruppe axialen Raum zu überbrücken. Hierdurch kann ein und derselbe Stützring nicht nur der Funktion des Spreizens der Kupplungsvorrichtung dienen, sondern er kann auch anderen Bauteilen der Kupplung als Funktionsteil dienen. Insbesondere kann der Federkranz eine Lagerscheibe für ein Axialwälzlager, insbesondere für ein Axialrollenlager oder ein Axialnadellager, ausbilden, wobei die Wälzkörperlaufläche durch den dritten Schenkel bereitgestellt wird. Hierdurch ist eine besonders kompakte Bauform möglich und es ist sichergestellt, dass die ausgeklinkten Federelemente immer in einem genau definierten Abstand vom Axiallager, über das die Betätigungskräfte in die Kupplungslamellen eingeleitet werden, positioniert sind.

Die Verwendung des vorstehend und nachstehend beschriebenen Federkranzes als Öffnungsfeder für eine Lamellenkupplung, insbesondere für eine hydraulisch angesteuerte Lamellenkupplung, wird als eigenständige Erfindung angesehen und gesondert beansprucht.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: eine Kupplungsbaugruppe mit einem in Figur 2 dargestellten Federkranz, und
- Fig. 2: den Federkranz aus Figur 1 in Einzelansicht.

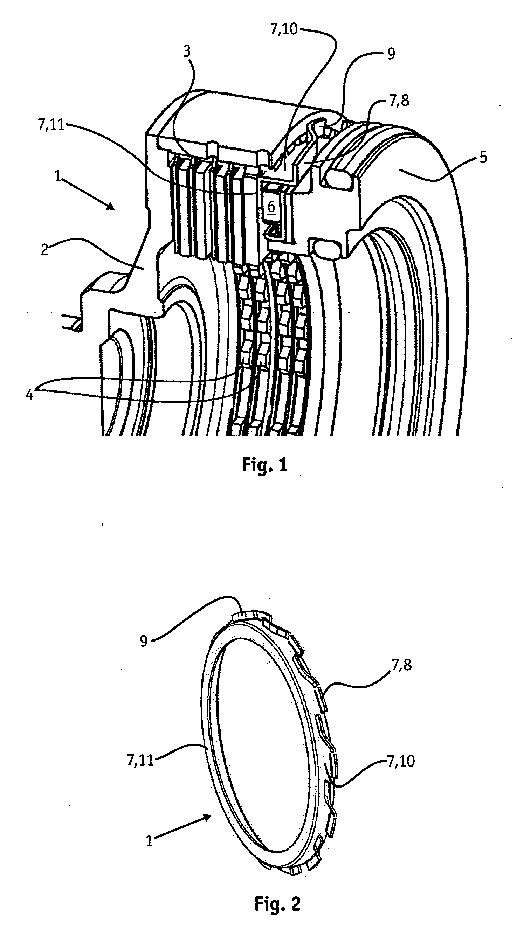

In Figur 1 ist eine Kupplungsbaugruppe 1 gezeigt. Das Kupplungsmoment wird über einen Außenlamellenträger 2 und das aus Außenlamellen 3 und Innenlamellen 4 bestehende Lamellenpaket auf einen Innenlamellenträger (nicht gezeigt) übertragen. Zur Betätigung der Kupplung wirkt ein hydraulischer beaufschlagter ringförmiger Druckkolben 5 über ein Axialrollenlager 6 auf das Lamellenpaket.

Zwischen Axialrollenlager 6 und der ersten Kupplungslamelle, auf die der vom Axiallager 6 ausgehende Druck unmittelbar ausgeübt wird, ist ein Schenkel 11 eines im Querschnitt etwa Z-förmigen Stützrings 7 vorgesehen. Dieser Stützring bildet einerseits mit einem ersten, vertikal ausgerichteten Schenkel 8 einen Federkranz mit einer Vielzahl von über seinen Umfang verteilten Federzungen 9 aus, die zwischen dem Außenlamellenträger 2 und dem Stützring 7 wirken, um den Druckkolben 5 und den Außenlamellenträger 2 auseinander zu treiben, wenn die Kupplung geöffnet werden soll.

Der Querschnitt des Stützrings 7 weist einen zweiten, horizontal ausgerichteten Schenkel 10 auf, mittels dem der axiale Raum, den das Axiallager 6 einnimmt, überbrückt wird. Hierdurch ist eine in sich verschachtelte, besonders Platz sparende Bauweise ermöglicht. An den zweiten Schenkel 10 schließt sich ein dritter Schenkel 11 an, der als Laufscheibe für das Axialrollenlager dient.

Um die Bauteilanzahl zu reduzieren und eine weitere Minimierung insbesondere des axialen Bauraumbedarfs zu erreichen, wird bei der gezeigten Kupplungsbaugruppe 1 ein im Querschnitt etwa Z-förmiger Stützring 7 eingesetzt, bei dem die Federelemente durch eine Vielzahl von aus dem Stützringmaterial ausgeklinkten Federzungen 9 gebildet werden. Diese Federzungen 9 sind durch das Ausklinken aus dem Material des ersten Schenkel 8 in axialer Richtung ausgelenkt, und die Federkraft beim Einfedern stützt sich an einem nicht ausgeklinkten Abschnitt des ersten Schenkels ab. Die Federzungen sind bevorzugt - wie in den Figuren gezeigt - tangential ausgeklinkt. Sie erstrecken sich also ausgehend vom ersten Schenkel in tangentialer Richtung und schwenken beim Einfedern um eine gedachte radial verlaufende Achse. Eine andersartige Ausrichtung ist aber denkbar.

Federkennlinie und Ansprechverhalten eines solchen Federkranzes ist für die eingangs beschriebene Anwendung bei einer kupplungsgesteuerten Ausgleichseinheit gut geeignet. Durch Variation der Anzahl, der Länge und Breite und des Winkels, mit dem die Federzungen vom ersten Schenkel 8 abstehen, und durch die Wahl des Stützringmaterials lässt sich die Federkennlinie gezielt beeinflussen und optimal an die Anforderungen des jeweiligen Anwendungsfalls anpassen. Durch die Bildung einer Lagerlauffläche am dritten Schenkel 11 entfällt die Notwendigkeit einer separaten Lagerscheibe.

Zusammenfassend betrifft die Erfindung einen von einem Stützring gebildeten Federkranz, der als Spreizelement für eine Lamellenkupplung eingesetzt wird. Die Federelemente sind durch Ausklinkungen aus einem Schenkel des Stützrings gebildet.

### Bezugszeichenliste

- 1: Kupplungsbaugruppe
- 2: Außenlamellenträger
- 3: Außenlamellen
- 4: Innenlamellen
- 5: Druckring
- 6: Axialrollenlager
- 7: Stützring
- 8: erster Schenkel
- 9: Federzungen
- 10: zweiter Schenkel
- 11: dritter Schenkel

## Patentansprüche

1. Federkranz für den Einsatz als Spreizelement einer Kupplungsvorrichtung (1), umfassend einen Stützring (7), **dadurch gekennzeichnet, dass**
eine Vielzahl von Federelementen (9) über den Umfang des Stützrings (7) vorgesehen ist, die als Ausklinkungen aus dem Stützringmaterial gebildet sind.

2. Federkranz nach Anspruch 1, **dadurch gekennzeichnet, dass** der Stützring (7) einen ersten Schenkel (8) aufweist, aus dem die Federelemente (9) ausgeklinkt sind, und einen zweiten Schenkel (10) aufweist, der vom Fuß des ersten Schenkels (8) ausgehend abgewinkelt ist, bevorzugt rechtwinklig abgewinkelt ist.

3. Federkranz nach Anspruch 2, **dadurch gekennzeichnet, dass** der Stützring (7) einen dritten Schenkel (11) aufweist, der vom zweiten Schenkel (10) ausgehend abgewinkelt ist, bevorzugt rechtwinklig abgewinkelt ist.

4. Federkranz nach Anspruch 3, **dadurch gekennzeichnet, dass** der dritte Schenkel (11) und der erste Schenkel (8) parallel verlaufen und sich der erste Schenkel (8) ausgehend vom zweiten Schenkel (10) radial auswärts erstreckt und sich der dritte Schenkel (11) ausgehend vom zweiten Schenkel (10) radial einwärts erstreckt.

5. Federkranz nach einem der vorhergehenden Ansprüche, **dadurch gekennzeichnet, dass** der Federkranz eine Lagerscheibe für ein Axialwälzlager (6), insbesondere für ein Axialrollenlager oder ein Axialnadellager ausbildet, wobei der dritte Schenkel (11) die Wälzkörperlauffläche ausbildet.

6. Verwendung eines Federkranzes nach einem der vorhergehenden Ansprüche als Öffnungsfeder für eine Lamellenkupplung (1), insbesondere für eine hydraulisch angesteuerte Lamellenkupplung.

## Claims

1. Spring ring for use as an expansion element of a coupling device (1), comprising a support ring (7), **characterized in that**
a plurality of spring elements (9) is provided around the periphery of the support ring (7), which spring elements are conformed as ratchet segments protruding from the support ring material.

2. Spring ring according to claim 1, **characterized in that** the support ring (7), comprises a first leg (8), from which the spring elements (9) are offset, and comprises a second leg (10) extending at an angle, preferably a right angle, starting from the base of the first leg (8).

3. Spring ring according to claim 2, **characterized in that** the support ring (7), comprises a third leg (11) extending at an angle, preferably a right angle, starting from the second leg (10).

4. Spring ring according to claim 3, **characterized in that** the third leg (11) and the first leg (8) are parallel, and the first leg (8) extends radially outwardly starting from the second leg (10), and the third leg (11) extends radially inwardly starting from the second leg (10).

5. Spring ring according to any of the previous claims, **characterized in that** the spring ring forms a bearing race for an axial roller bearing (6), particularly for an axial roller bearing or an axial needle bearing, wherein the third leg (11) forms the rolling element running surface.

6. Use of a spring ring according to any of the preceding claims as an opening spring for a multi-plate clutch (1), particularly a hydraulically actuated multi-plate clutch.

## Revendications

1. Couronne à ressort pour l'utilisation en tant qu'élément expansible d'un dispositif d'embrayage (1) comprenant une bague d'appui (7)
**caractérisée en ce**
**qu'**une pluralité d'éléments faisant ressort (9) est prévue sur la périphérie de la bague d'appui (7) qui sont constitués comme des cliquets du matériau de la bague d'appui.

2. Couronne à ressort selon la revendication 1 **caractérisée en ce que** la bague d'appui (7) présente une première branche (8)à partir de laquelle les éléments faisant ressort (9) sont décliquetés et présente une deuxième branche (10) qui est pliée en partant du pied de la première branche (8), de préférence pliée à angle droit.

3. Couronne à ressort selon la revendication 2 **caractérisée en ce que** la bague d'appui (7) présente une troisième branche (11) qui est pliée en partant de la deuxième branche (10), de préférence pliée à angle droit.

4. Couronne à ressort selon la revendication 3 **caractérisée en ce que** la troisième branche (11) et la première branche (8)sont parallèles et **en ce que** la première branche (8) s'étend dans le sens radial vers l'extérieur en partant de la deuxième branche (10) et **en ce que** la troisième branche (11) s'étend dans le sens radial vers l'intérieur en partant de la deuxième branche (10).

5. Couronne à ressort selon une quelconque des revendications précédentes **caractérisée en ce que** la couronne à ressort constitue une rondelle-palier pour un roulement mécanique à charge axiale (6), en particulier pour un roulement à rouleaux à charge axiale ou un roulement à aiguilles à charge axiale, la troisième branche (11) constituant la surface de roulement du corps du roulement.

6. Utilisation d'une couronne à ressort selon une quelconque des revendications précédentes comme ressort d'ouverture pour un embrayage multidisque (1), en particulier pour un embrayage multidisque à commande hydraulique.
